# EUROPÄISCHE PATENTSCHRIFT

(11) **EP 4 100 298 B1**
(45) Veröffentlichungstag und Bekanntmachung des Hinweises auf die Patenterteilung: **25.06.2025**
(21) Anmeldenummer: 21702916.4
(22) Anmeldetag: 28.01.2021
(51) Int. Cl.: B62D 5/04, B62D 7/14

(54) **ELEKTROMECHANISCHE ZWEIKREISLENKUNG FÜR EIN NUTZFAHRZEUG**
ELECTROMECHANICAL DUAL STEERING SYSTEM FOR A UTILITY VEHICLE
SYSTÈME DE DIRECTION ÉLECTROMÉCANIQUE DOUBLE POUR UN VÉHICULE UTILITAIRE

(30) Priorität: 07.02.2020 DE 102020103150
(43) Veröffentlichungstag der Anmeldung: 14.12.2022
(73) Patentinhaber: KNORR-BREMSE Systeme für Nutzfahrzeuge GmbH, 80809 München (DE)
(72) Erfinder: MÜLLER, Jens-Hauke, 42553 Velbert-Neviges (DE); KOGAN, Alexander, 51105 Köln (DE)
(86) Internationale Anmeldenummer: PCT/EP2021/051954
(87) Internationale Veröffentlichungsnummer: WO 2021/156132

(56) Entgegenhaltungen:
- DE-A1- 102008 022 606
- DE-A1- 102012 212 608
- DE-A1- 102013 000 898
- DE-A1- 102017 104 667
- DE-A1- 102017 108 378

## Beschreibung

Die Erfindung betrifft eine elektromechanische Zweikreislenkung für ein Nutzfahrzeug gemäß dem Oberbegriff von Anspruch 1 sowie ein Nutzfahrzeug.

Zur Lenkung eines Nutzfahrzeugs werden in der Regel hydraulische Zweikreislenkungen eingesetzt. Diese bestehen aus zwei Lenkungen für jeweils eine eigene Lenkachse, wobei die Lenkkräfte des Fahrers hydraulisch unterstützt werden. Im normalen Betrieb bekommen beide Lenkungen die hydraulische Unterstützung von einer Hydraulikpumpe, welche vom Hauptmotor des Fahrzeuges angetrieben wird. Für eine redundante Auslegung ist eine fahrabhängig angetriebene Notlenkpumpe nötig, auf welche bei einem Ausfall des Hauptmotors umgeschaltet wird. Gleichzeitig wird dabei eine der beiden Lenkachsen von der hydraulischen Unterstützung getrennt, um die Notlenkpumpe nicht zu überlasten. So wird eine Lenkbarkeit des Nutzfahrzeuges auch bei Ausfall des Hauptmotors gewährleistet.

Das hydraulische System ist im Vergleich zu einer elektrischen Lenkunterstützung komplizierter, so dass immer häufiger elektrisch unterstützte Lenkungen zum Einsatz kommen. Hier wird die Lenckraft des Fahrers durch einen Elektromotor unterstützt, welcher wie in der US20120241244A1 mittels eines Getriebes auf die eigentliche Lenkachse eingreift. Auch Kombinationen aus einer hydraulisch unterstützten ersten Lenkachse und einer elektrisch betätigten zweiten Lenkachse sind bekannt. Solch eine Zweikreislenkung ist zum Beispiel in der DE19910001A1 zu sehen. Dies ermöglicht den Verzicht auf Hydraulikleitungen zur zweiten, häufig hinteren Achse eines Nutzfahrzeugs. Stattdessen wird nur ein Kabel zur zweiten Achse benötigt.

Im Zuge des autonomen Fahrens werden auch Lenkungen eingesetzt, welche auf eine mechanische Koppelung von Fahrer und Lenkung gänzlich verzichten und die Lenkung ausschließlich über einen Elektromotor betätigen. In der DE102012212608A1 ist dazu ein Elektromotor mit einem als Hohlwelle ausgeführten Rotor gezeigt, welche direkt die Lenkachse antreibt. So kann das Fahrzeug die Lenkung ohne zutun des Fahrers steuern und ein autonomer Fahrbetrieb oder ein eigenständiges Eingreifen des Fahrzeugs auf die Lenkung ermöglicht. Des Weiteren offenbart Dokument DE102017104667A1 den Oberbegriff des unabhängigen Anspruchs 1.

Fällt bei einer elektrisch unterstützten oder rein elektrisch betriebenen Lenkung die Hauptstromversorgung jedoch aus, ist ein Lenken des Fahrzeugs nur noch erschwert, ohne Kraftunterstützung, oder gar nicht mehr möglich.

Die Aufgabe der Erfindung besteht ausgehend von diesem Stand der Technik darin, einen Betrieb einer elektromechanischen Zweikreislenkung für Nutzfahrzeuge wirksamer gegen einen Ausfall zu sichern.

Bezogen auf eine elektromechanische Zweikreislenkung mit den Merkmalen des Oberbegriffs von Anspruch 1 wird diese Aufgabe durch die Merkmale des kennzeichnenden Teils von Anspruchs 1 gelöst. Bezogen auf ein Nutzfahrzeug wird diese Aufgabe durch ein Nutzfahrzeug mit den Merkmalen des Anspruchs 14 gelöst.

Wesentlich für die Erfindung ist, dass bei einem Ausfall der Hauptstromversorgung eine Notstromversorgung aktiv wird, welche mindestens eine der Lenkungen mit elektrischer Energie versorgt, sodass ein sicheres Lenken des Nutzfahrzeugs möglich bleibt. Dies verbindet die Vorteile einer redundant ausgelegten hydraulischen Zweikreislenkung mit denen einer weniger aufwendigen und wartungsärmeren elektromechanischen Zweikreislenkung.

Die erfindungsgemäße elektromechanische Zweikreislenkung ist für ein Nutzfahrzeug und umfasst zwei Lenkungen, welche jeweils eine Antriebseinheit zur Betätigung eines jeweiligen Lenkgestänges für Räder des Nutzfahrzeugs aufweist. Die zwei Lenkungen sind vorzugsweise an zwei verschiedenen Achsen des Nutzfahrzeugs angebracht. Dadurch verbessert sich das Fahrverhalten des Nutzfahrzeugs und der Wendekreis wird kleiner. Das Lenkgestänge der Räder kann beispielsweise an die Radnabe des jeweiligen Rads angreifen und so die Räder um eine Drehachse drehen, sodass ein Lenken des Fahrzeugs ermöglicht wird. Dabei können die Räder der ersten Achse in die gleiche Richtung wie die Räder der zweiten Achse gedreht werden, sodass ein verbessertes Fahrverhalten bei höheren Geschwindigkeiten erzielt wird. Die Räder der beiden Achsen können aber auch entgegengesetzt gedreht werden, so dass ein kleinerer Wendkreis bei niedrigen Geschwindigkeiten erreicht wird.

Erfindungsgemäß umfasst jede Antriebseinheit der Lenkungen einen jeweiligen Elektromotor. Ferner umfasst die erfindungsgemäße Zweikreislenkung eine Hauptstromversorgung zur Versorgung der Elektromotoren mit elektrischer Energie. Die Elektromotoren können eine Lenkwelle der Lenkung betätigen. Dabei können die Elektromotoren direkt auf eine Lenkwelle eingreifen oder mittels eines Getriebes mit dieser verbunden sein. Andere Koppelungen sind ebenfalls denkbar. Der Elektromotor kann die Lenkwelle verschwenken, wobei die Schwenkbewegung dann durch ein Lenkgetriebe der Lenkung in eine translatorische Bewegung einer Lenkstange des Lenkgestänges umgewandelt wird. Auf diese Weise wird das Lenkgestänge der Räder betätigt.

Die elektromechanische Zweikreislenkung ist dadurch gekennzeichnet, dass die Zweikreislenkung mindestens eine Notstromversorgung zur Versorgung eines Elektromotors mit Energie bei einem Ausfall der Hauptstromversorgung aufweist. Sollte die Hauptstromversorgung des Nutzfahrzeugs ausfallen, ist die Notstromversorgung in der Lage die Lenkbarkeit des Nutzfahrzeugs aufrecht zu erhalten, indem die Notstromversorgung den Elektromotor der einen Lenkungen mit elektrischer Energie versorgt, und die andere Lenkung starr gestellt wird. So kann das Fahrzeug beispielsweise sicher in den Stand gebracht werden oder je nach Auslegung der Notstromversorgung ungestört weiter betrieben werden.

Erfindungsgemäß werden nicht alle Elektromotoren mit Strom versorgt, damit die Notstromversorgung nicht überstrapaziert wird. So wird eine Lenkung starr gestellt und ausschließlich die andere Lenkung zum Lenken des Nutzfahrzeugs verwendet. Die Erfindung ist daher dadurch gekennzeichnet, dass die Notstromversorgung dazu eingerichtet, genau einen Elektromotor mit Energie zu versorgen.

Sofern die Notstromversorgung dies zulässt, können aber auch beide Lenkungen mit elektrischer Energie versorgt werden. Daher sieht eine weitere bevorzugte Ausführungsform der Zweikreislenkung vor, dass die Zweikreislenkung eine Notstromversorgung zur Versorgung aller Elektromotoren mit Energie bei einem Ausfall der Hauptstromversorgung aufweist. Um das System der Notstromversorgung möglichst einfach zu halten und nicht alle Bauteile doppelt ausführen zu müssen, kann es von Vorteil sein, eine Notstromversorgung aufzubauen, die alle Elektromotoren der Lenkungen mit elektrischer Energie versorgt. So müssen lediglich Kabelverbindungen von der Notstromversorgung zum jeweiligen Elektromotor gelegt werden. Einzelne Peripherie für jede einzelne Lenkung kann dabei entfallen.

Gemäß einer bevorzugten Ausführungsform der erfindungsgemäßen Zweikreislenkung ist diese daher dadurch gekennzeichnet, dass die Zweikreislenkung je Elektromotor eine im Wesentlichen eigenständige Notstromversorgung umfasst. Bei dieser Variante ist für jede Lenkung eine eigene Notstromversorgung vorgesehen. Dies bietet den Vorteil, dass bei einem Ausfall der Hauptstromversorgung sämtliche Vorteile der Zweikreislenkung, wie das verbesserte Fahrverhalten, erhalten bleiben. Zusätzlich bietet sie den Vorteil, dass das Nutzfahrzeug sogar bei einem Ausfall eine Notstromversorgung noch lenkbar bleibt.

Eine weitere bevorzugte Ausführungsform der erfindungsgemäßen Zweikreislenkung ist dadurch gekennzeichnet, dass die Notstromversorgung einen Generator aufweist, welcher dazu eingerichtet ist, durch ein Rollen des Nutzfahrzeugs angetrieben zu werden und wenigstens einen der Elektromotoren mit Energie zu versorgen. Diese Variante sieht einen zusätzlichen Generator vor, der zum Beispiel an eine Antriebswelle des Nutzfahrzeugs gekoppelt ist, so dass dieser Generator sich dreht, sobald das Nutzfahrzeug rollt, unabhängig davon, ob sich der Motor des Nutzfahrzeugs dreht. So kann die Versorgung mit elektrischer Energie während des Fahrbetriebs auch bei Stillstand des Motors gewährleistet werde. Im Stand könnte durch die Kombination mit einem Pufferspeicher ebenfalls die vorübergehende Versorgung der Lenkung mit elektrischer Energie gewährleistet werden, so dass auch im Stand eine Lenkunterstützung bzw. eine Lenkung möglich ist, was untenstehend genauer beschrieben wird

Gemäß einer weiteren bevorzugten Ausführungsform der erfindungsgemäßen Zweikreislenkung ist diese dadurch gekennzeichnet, dass die Notstromversorgung einen Energiespeicher zur Versorgung des Elektromotors aufweist. Es ist weiter bevorzugt, dass die Notstromversorgung dazu eingerichtet ist, den Energiespeicher geladen vorzuhalten. Bevorzugt handelt es sich bei diesem Energiespeicher um einen Kondensator. Hier bildet der Kondensator die Energiequelle für den Betrieb der Lenkung im Notbetrieb. Je nach Größe des Kondensators kann der Betrieb der Lenkung für einen kurzen Zeitraum zum sofortigen sicheren Anhalten des Nutzfahrzeugs vorgesehen sein, oder aber bei höherer Kapazität für einen längeren Zeitraum die Lenkung mit Strom versorgen, beispielsweise um das Nutzfahrzeug von einer Straße auf einen sicheren Abstellort zu lenken. Damit die unmittelbare Umstellung auf die Notstromversorgung stattfinden kann, muss der Kondensator geladen vorgehalten werden.

Eine bevorzugte Ausführungsform der erfindungsgemäßen Zweikreislenkung ist dadurch gekennzeichnet, dass die Notstromversorgung dazu eingerichtet ist, den Energiespeicher bei einem Ausfall der Hauptstromversorgung durch Rekuperation von Rückstellkräften aus dem Lenkgestänge aufzuladen. Sind die Räder eines Nutzfahrzeugs im Fahrbetrieb ausgelenkt, herrscht eine Rückstellkraft, die die Räder wieder in Richtung Mittelstellung drängen möchte. Diese Rückstellkraft kann durch Rekuperation genutzt werden. Zur Betätigung des Lenkgestänges muss sich der Elektromotor drehen. Wenn die Rückstellkräfte der Lenkung die Lenkwelle zurückdrehen, wird zwangsläufig der Elektromotor mitgedreht und kann im Generatorbetrieb wieder elektrische Energie erzeugen. Diese elektrische Energie kann dann genutzt werden, um den Kondensator aufzuladen. Daher ist es bevorzugt, dass der Elektromotor dazu eingerichtet ist, bei Drehung durch die Rückstellkräfte in einem Generatorbetrieb den Energiespeicher aufzuladen. Dies ermöglicht entweder eine Verlängerung des möglichen Notstrom-Betriebs, oder aber kann dazu genutzt werden, den Kondensator kleiner mit weniger Kapazität auszulegen, um die Kosten geringer zu gestalten. Zudem kann ein Kondensator durch seine sehr hohen Ströme schnell aufgeladen werden, so dass er sich gut dafür eignet, Energie aus der Rekuperation aufzunehmen.

Gemäß einer bevorzugten Ausführungsform der erfindungsgemäßen Zweikreislenkung ist diese dadurch gekennzeichnet, dass der Energiespeicher einen Akkumulator aufweist. Wenn gemäß der oben beschriebenen Variante ein Generator vorgesehen ist, kann der Energiespeicher und insbesondere der Akkumulator als Zwischenspeicher für den Generator zur Versorgung des Elektromotors mit Energie dienen. Auf diese Weise wird die Lenkung mit Energie versorgt.

Möglicherweise wird eine höhere Kapazität des Energiespeichers für die Versorgung der Lenkung benötigt. Vorzugsweise handelt es sich bei dem ein Akkumulator um einen Lithium-Ionen-, Lithium-Polymer-, Blei- oder Nickel-Metallhydrid-Akkumulator. Solche Akkumulatoren haben im Vergleich zum Kondensator deutlich höhere Kapazitäten und können so die Notstromversorgung länger gewährleisten.

Gemäß einer weiteren bevorzugten Ausführungsform der erfindungsgemäßen Zweikreislenkung ist diese dadurch gekennzeichnet, dass jede Lenkung ein eigenes, im Wesentlichen geschlossenes Lenkgehäuse aufweist, und in wenigstens einem Lenkgehäuse der Lenkungen die Notstromversorgung sowie die jeweilige Antriebseinheit angeordnet sind. Durch diese Bauweise bleibt das Lenkgetriebe im Wesentlichen als Einheit bestehen, so dass kein weiterer größerer Baustein der Lenkung entsteht. Es ist nicht ausgeschlossen, dass sich jedoch einzelne Bauteile der Lenkung oder der Notstromversorgung außerhalb des Lenkgehäuses befinden. Vorzugsweise ist der Energiespeicher und insbesondere der Kondensator in dem Lenkgehäuse angeordnet. Bevorzugt ist der Generator außerhalb des Lenkgehäuses angeordnet, beispielsweise auf der Antriebswelle des Nutzfahrzeugs angeordnet.

Eine weitere bevorzugte Ausführungsform der erfindungsgemäßen Zweikreislenkung ist dadurch gekennzeichnet, dass die Kraft zur Betätigung des Lenkgestänges allein aus dem jeweiligen Elektromotor stammt. Soll das Fahrzeug in der Lage sein, zum Beispiel autonom zu fahren oder selbstständig Lenkeingriffe vorzunehmen, sollte das Lenksystem in der Lage sein nicht nur Lenkkräfte des Fahrers zu verstärken, sondern darüber hinaus allein aus eigener Kraft die Lenkung zu betätigen. Daher kann in einem solchen Fall die Kraft zur Betätigung des Lenkgestänges allein aus einem Elektromotor stammen.

Gemäß einer bevorzugten Ausführungsform der erfindungsgemäßen Zweikreislenkung ist diese dadurch gekennzeichnet, dass die Zweikreislenkung eine Datenschnittstelle zur Ansteuerung des Elektromotors durch ein hochautonomes Fahrsteuersystem zum fahrerlosen Betrieb des Nutzfahrzeugs. Ein solches hochautonomes Fahrsteuersystem wird auch als "highly autonomous driving system" bezeichnet. Für einen fahrerlosen Fahrbetrieb werden diverse Sensoren an Lenkrad und Lenkung benötigt, um den aktuellen Zustand der Lenkung zu erfassen und zu steuern. Dazu wird eine Datenschnittstelle an der Lenkung benötigt, die beispielsweise Lenkwinkel, Lenkkräfte, Motorparameter, Steuerungsbefehle oder ähnliche Daten verarbeitet. So kann ein highly autonomous driving System auf die Lenkung zugreifen, sie auslesen und steuern.

Gemäß einer weiteren bevorzugten Ausführungsform der erfindungsgemäßen Zweikreislenkung ist diese dadurch gekennzeichnet, dass die Zweikreislenkung einen an einem Richtungswählelement des Nutzfahrzeugs angeordneten Sensor aufweist, der einen Soll-Lenkwinkel erfasst und an ein Motor-Steuermodul der Zweikreislenkung überträgt, welches basierend auf dem erfassten Soll-Lenkwinkel den Elektromotor ansteuert. Ein Richtungswählelement eines Fahrzeugs, wie beispielsweise ein Lenkrad, kann mittels Sensoren die aktuelle Stellung und damit den Soll-Lenkwinkel mittels eines oder mehreren Sensoren erfassen und an ein Motor-Steuermodul der Lenkung übertragen. So kann das Steuermodul diesen Soll-Lenkwinkel in ein Motorsteuerungssignal umwandeln und die Lenkung entsprechend betätigen. Auf diese Weise muss nicht zwingend eine mechanische Verbindung zwischen dem Richtungswählelement eines Nutzfahrzeugs und der eigentlichen Lenkung des Nutzfahrzeugs bestehen. Vorzugsweise wird der Soll-Lenkwinkel mit einem tatsächlichen Lenkwinkel abgeglichen. Dies verbessert die Steuerung und Regelung des Elektromotors der Lenkung und führt zu einem höheren Fahrkomfort sowie erhöhter Sicherheit.

Eine bevorzugte Ausführungsform der erfindungsgemäßen Zweikreislenkung ist dadurch gekennzeichnet, dass der jeweilige Elektromotor zur Betätigung des Lenkgestänges einen Linearaktuator umfasst. Damit eine Umwandlung der rotatorischen Bewegung des Elektromotors mittels eines Getriebes in eine translatorische Bewegung entfallen kann, bietet sich ein Linearaktuator an. Dieser führt durch seine Bauart bedingt direkt eine für Betätigung des Lenkgestänges benötigte translatorische Bewegung aus. Vorzugsweise weist der Linearaktuator einen Hubmagneten auf. Diese Bauart hat gegenüber beispielsweise der Schwingspulenbauart den Vorteil, dass einfacher höhere Stellkräfte erzielt werden können, die in der Lage sind die Lenkung sicher zu betätigen. Durch den Direktantrieb des Hubmagneten werden gegenüber Getriebeantrieben meist höhere Stellgeschwindigkeiten und geringere Stellzeiten erzielt.

Eine weitere bevorzugte Ausführungsform der erfindungsgemäßen Zweikreislenkung ist dadurch gekennzeichnet, dass der jeweilige Elektromotor einen als Hohlwelle ausgeführten Rotor aufweist, welcher mit einer Spindelmutter der Antriebseinheit drehfest verbunden ist, welche Spindelmutter dazu eingerichtet ist, eine von der Antriebseinheit umfasste Gewindespindel zur Betätigung des Lenkgestänges anzutreiben. Diese Ausführungsform benötigt kein weiteres Getriebe zwischen Elektromotor und der Gewindespindel des Lenkgetriebes. Hier ist der Rotor fest mit der Spindelmutter verbunden und treibt so direkt die Gewindespindel an. Ein Vorteil ist, dass der Motor im Wesentlichen platzsparend um die Welle herum angeordnet ist.

Das erfindungsgemäße Nutzfahrzeug ist dadurch gekennzeichnet, dass es eine erfindungsgemäße elektromechanische Zweikreislenkung aufweist.

Bevorzugte Ausgestaltungen, Merkmale und Vorteile der erfindungsgemäßen elektromechanischen Zweikreislenkung betreffen auch das erfindungsgemäße Nutzfahrzeug und umgekehrt.

Die Erfindung wird anhand der nachfolgenden Figuren näher erläutert. Diese sind nur beispielhaft zu verstehen und sollen die Erfindung nicht auf die gezeigten Ausführungsbeispiele beschränken.

Es zeigt
- Fig.1:: eine Übersichtsdarstellung einer elektromechanischen Zweikreislenkung,
- Fig. 2:: eine Schnittdarstellung einer Lenkung eines erstes Ausführungsbeispiels einer erfindungsgemäßen elektromechanischen Zweikreislenkung,
- Fig. 3:: eine Schnittdarstellung einer Lenkung eines zweiten Ausführungsbeispiels einer erfindungsgemäßen elektromechanischen Zweikreislenkung und
- Fig. 4:: eine Draufsicht einer Lenkung eines dritten Ausführungsbeispiels einer erfindungsgemäßen elektromechanischen Zweikreislenkung.

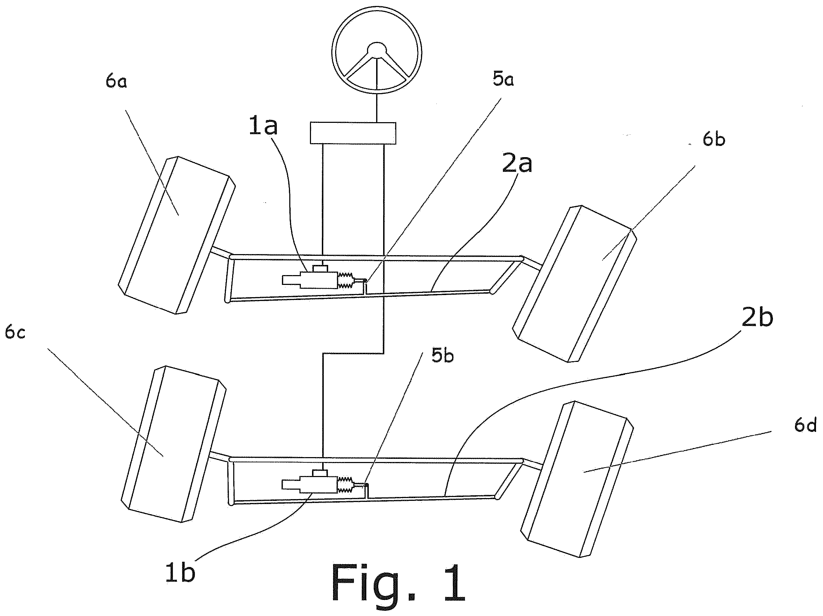

Die Darstellung der Fig. 1 zeigt in der Übersicht den grundlegenden Aufbau einer elektromechanischen Zweikreislenkung für Nutzfahrzeuge. Diese Zweikreislenkung weist zwei Lenkungen 1a, b auf, und zwar speziell jeweils eine Lenkung 1a, b für die vordere Lenkachse 2a und die hintere Lenkachse 2b des Nutzfahrzeugs. Ebenfalls dargestellt ist das als Lenkrad ausgeführte Richtungswählelement 3 des Nutzfahrzeugs, welches vorliegend auf hier nicht weiter dargestellte Art und Weise elektrisch mit den Lenkungen 1a, b verbunden ist, die Lenkgestänge 5a, b welche die Lenkungen 1a, b mit der jeweiligen Lenkachse 2a, b verbinden sowie die Räder 6a, b, c, d. Dieser Aufbau gilt für alle nachfolgend beschriebenen Ausführungsbeispiele. Dabei wird jeweils eine einzelne Lenkung 1a, b, wobei aber die jeweils andere Lenkung 1a, b identisch ausgestaltet ist.

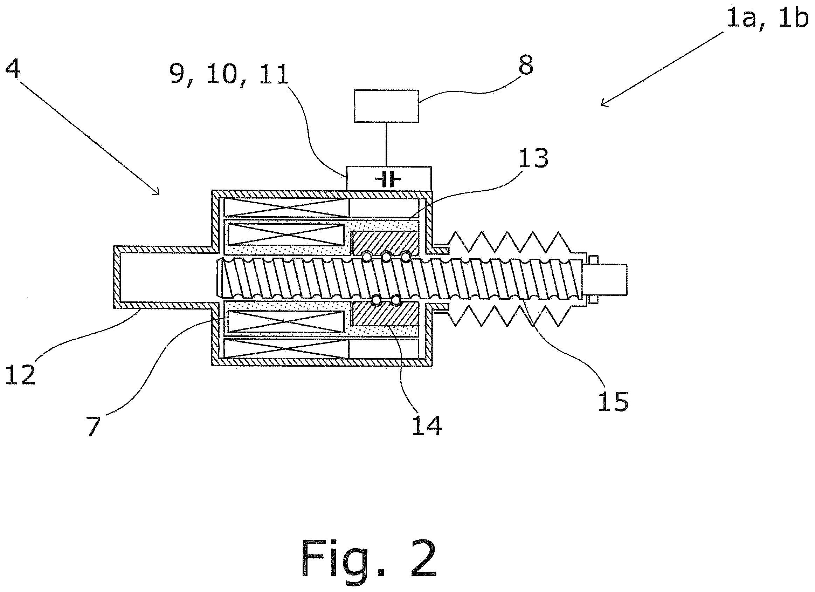

Für das erste Ausführungsbeispiel der elektromechanischen Zweikreislenkung ist die Lenkung 1a mit Antriebseinheit 4 in der Fig. 2 dargestellt, wobei die Antriebseinheit 4 in einem im Wesentlichen geschlossenen Lenkgehäuse 12 der Lenkung 1a angeordnet ist. Der Elektromotor 7 dieser Antriebseinheit 4 wird im regulären Betrieb von dem Bordnetz als Hauptstromversorgung 8 mit elektrischer Energie versorgt. Daneben weist die Lenkung 1a einen als Kondensator 10 ausgebildeten Energiespeicher 11 einer Notstromversorgung 9 für den Elektromotor 7 auf, welche Notstromversorgung 9 den Elektromotor 7 bei Ausfall der Hauptstromversorgung 8 versorgt. Der Rotor 13 des Elektromotors 7 bildet mit der Spindelmutter 14 und der Gewindespindel 15 zur Betätigung des jeweiligen Lenkgestänges 5a, b.

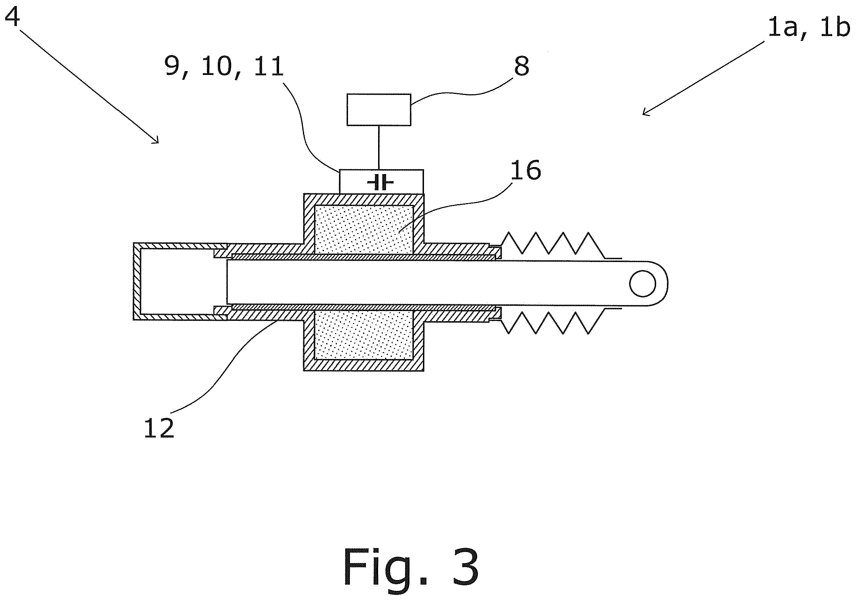

Die Lenkung 1a mit der Antriebseinheit 4 des zweiten Ausführungsbeispiels ist in der Fig. 3 dargestellt. Dieses zweite Ausführungsbeispiel entspricht im Grunde dem ersten Ausführungsbeispiel, wobei hier der Elektromotor 7 jedoch einen als Hubmagneten ausgebildeten Linearaktuator 16 zur Betätigung des jeweiligen Lenkgestänges 5a, b aufweist.

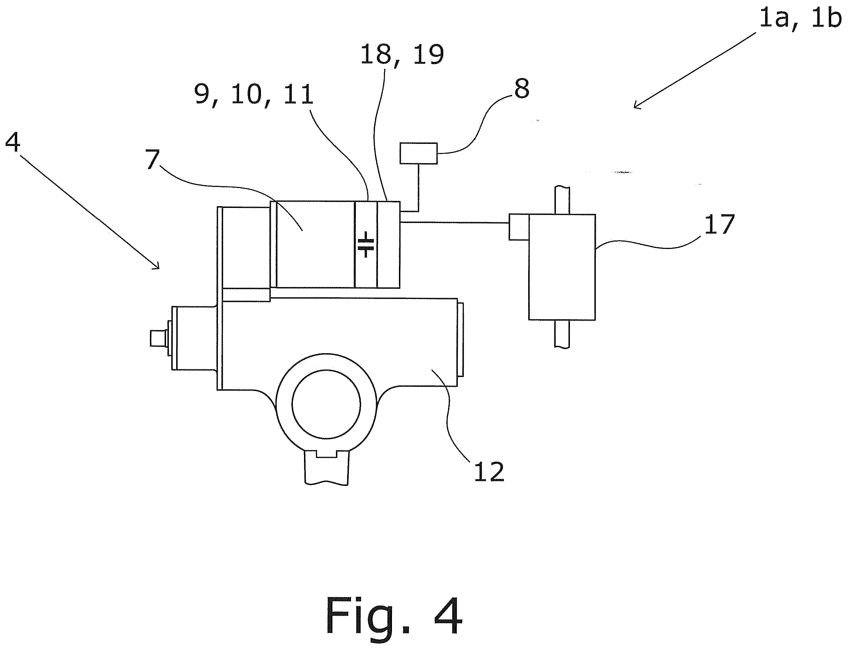

Schließlich ist die Lenkung 1a mit der Antriebseinheit 4 des dritten Ausführungsbeispiels in der Fig. 4 wiedergegeben. Bei diesem Ausführungsbeispiel weist die Notstromversorgung 9 sowohl einen als Kondensator 10 ausgebildeten Energiespeicher 11 als auch einen außerhalb des Lenkgehäuses angeordneten Generator 17 auf. Dieser wird fahrabhängig angetrieben, versorgt dabei den Elektromotor 7 und lädt den als Zwischenspeicher fungierenden Kondensator 10 auf. Auf diese Weise wird der Kondensator 10 geladen vorgehalten. Dieses Ausführungsbeispiel der Zweikreislenkung weist ferner ein Motor-Steuermodul 18 auf, an welches ein Soll-Lenkwinkel übertragen wird, welcher von einem Sensor an dem Richtungswählelement 3 erfasst wurde. Das Motor-Steuermodul 18 steuert dann den Elektromotor 7 gemäß dem erfassten Soll-Lenkwinkel an. Auf diese Weise wird eine Steer-By-Wire-Funktionalität verwirklicht. Daneben bildet das Motor-Steuermodul 18 auch eine Datenschnittstelle 19 für ein autonomes Fahrsteuersystem, sodass ein fahrerloser Betrieb des Nutzfahrzeugs ermöglicht wird.

## Patentansprüche

1. Elektromechanische Zweikreislenkung für ein Nutzfahrzeug mit zwei Lenkungen (1a, b) umfassend jeweils eine Antriebseinheit (4) zur Betätigung eines jeweiligen Lenkgestänges (5a, b) für Räder (6a, b, c, d) des Nutzfahrzeugs, wobei jede Antriebseinheit (4) einen jeweiligen Elektromotor (7) aufweist. wobei die Zweikreislenkung, eine Hauptstromversorgung (8) zur Versorgung der Elektromotoren (7) mit Energie aufweist, **dadurch gekennzeichnet, dass** die Zweikreislenkung mindestens eine Notstromversorgung (9) zur Versorgung eines Elektromotors (7) der einen Lenkung (1a) mit Energie bei einem Ausfall der Hauptstromversorgung (8) aufweist, und die andere Lenkung (1b) starr gestellt wird.

2. Elektromechanische Zweikreislenkung nach Anspruch 1, **dadurch gekennzeichnet, dass** die Zweikreislenkung je Elektromotor (7) eine im Wesentlichen eigenständige Notstromversorgung (9) umfasst.

3. Elektromechanische Zweikreislenkung nach einem der Ansprüche 1 bis 2, **dadurch gekennzeichnet, dass** die Notstromversorgung (9) einen Generator (17) aufweist, welcher dazu eingerichtet ist, durch ein Rollen des Nutzfahrzeugs angetrieben zu werden und wenigstens einen der Elektromotoren (7) mit Energie zu versorgen.

4. Elektromechanische Zweikreislenkung nach einem der Ansprüche 1 bis 3, **dadurch gekennzeichnet, dass** die Notstromversorgung (9) einen Energiespeicher (11) zur Versorgung des Elektromotors (7) aufweist.

5. Elektromechanische Zweikreislenkung nach Anspruch 4, **dadurch gekennzeichnet, dass** die Notstromversorgung (9) dazu eingerichtet ist, den Energiespeicher (11) bei einem Ausfall der Hauptstromversorgung (8) durch Rekuperation von Rückstellkräften aus dem Lenkgestänge (5a, b) aufzuladen.

6. Elektromechanische Zweikreislenkung nach einem der Ansprüche 4 bis 5, **dadurch gekennzeichnet, dass** der Energiespeicher (11) einen Akkumulator aufweist.

7. Elektromechanische Zweikreislenkung nach einem der Ansprüche 1 bis 6, **dadurch gekennzeichnet, dass** jede Lenkung (1a, b) ein eigenes, im Wesentlichen geschlossenes Lenkgehäuse (12) aufweist, und in wenigstens einem Lenkgehäuse (12) die Notstromversorgung (9) sowie die jeweilige Antriebseinheit (4) angeordnet sind.

8. Elektromechanische Zweikreislenkung nach einem der Ansprüche 1 bis 7, **dadurch gekennzeichnet, dass** die Zweikreislenkung eine Notstromversorgung (9) zur Versorgung aller Elektromotoren (7) mit Energie bei einem Ausfall der Hauptstromversorgung (8) aufweist.

9. Elektromechanische Zweikreislenkung nach einem der Ansprüche 1 bis 8, **dadurch gekennzeichnet, dass** die Kraft zur Betätigung des Lenkgestänges (5a, b) allein aus dem jeweiligen Elektromotor (7) stammt.

10. Elektromechanische Zweikreislenkung nach einem der Ansprüche 1 bis 10, **dadurch gekennzeichnet, dass** die Zweikreislenkung eine Datenschnittstelle (19) zur Ansteuerung des Elektromotors (7) durch ein autonomes Fahrsteuersystem zum fahrerlosen Betrieb des Nutzfahrzeugs umfasst.

11. Elektromechanische Zweikreislenkung nach einem der Ansprüche 1 bis 10, **dadurch gekennzeichnet, dass** die Zweikreislenkung einen an einem Richtungswählelement des Nutzfahrzeugs angeordneten Sensor aufweist, der einen Soll-Lenkwinkel erfasst und an ein Motor-Steuermodul (18) der Zweikreislenkung überträgt, welches basierend auf dem erfassten Soll-Lenkwinkel den Elektromotor (7) ansteuert.

12. Elektromechanische Zweikreislenkung nach einem der Ansprüche 1 bis 11, **dadurch gekennzeichnet, dass** der jeweilige Elektromotor (7) zur Betätigung des Lenkgestänges (5a, b) einen Linearaktuator (16) umfasst.

13. Elektromechanische Zweikreislenkung nach einem der Ansprüche 1 bis 12, **dadurch gekennzeichnet, dass** der jeweilige Elektromotor (7) einen als Hohlwelle ausgeführten Rotor (13) aufweist, welcher mit einer Spindelmutter (14) der Antriebseinheit (4) drehfest verbunden ist, welche Spindelmutter (14) dazu eingerichtet ist, eine von der Antriebseinheit (4) umfasste Gewindespindel (15) zur Betätigung des Lenkgestänges (5a, b) anzutreiben.

14. Nutzfahrzeug, **dadurch gekennzeichnet, dass** es eine elektromechanische Zweikreislenkung nach einem der Ansprüche 1 bis 13 aufweist.

## Claims

1. Electromechanical dual-circuit steering system for a utility vehicle having two steering systems (1a, b), each comprising a drive unit (4) for actuating a respective steering linkage (5a, b) for wheels (6a, b, c, d) of the utility vehicle, wherein each drive unit (4) has a respective electric motor (7), wherein the dual-circuit steering system has a main power supply (8) for supplying the electric motors (7) with energy, **characterized in that** the dual-circuit steering system has at least one emergency power supply (9) for supplying one electric motor (7) of the one steering system (1a) with energy in the event of a failure of the main power supply (8), and the other steering system (1b) is made rigid.

2. Electromechanical dual-circuit steering system according to claim 1, **characterized in that** the dual-circuit steering system comprises one substantially independent emergency power supply (9) per electric motor (7).

3. Electromechanical dual-circuit steering system according to any one of claims 1 and 2, **characterized in that** the emergency power supply (9) has a generator (17) which is designed to be driven by rolling of the utility vehicle and to supply at least one of the electric motors (7) with energy.

4. Electromechanical dual-circuit steering system according to any one of claims 1 to 3, **characterised in that** the emergency power supply (9) has an energy store (11) for supplying the electric motor (7).

5. Electromechanical dual-circuit steering system according to claim 4, **characterized in that** the emergency power supply (9) is designed to charge up the energy store (11), in the event of a failure of the main power supply (8), by recuperation of restoring forces from the steering linkage (5a, b).

6. Electromechanical dual-circuit steering system according to any one of claims 4 to 5, **characterized in that** the energy store (11) has a rechargeable battery.

7. Electromechanical dual-circuit steering system according to any one of claims 1 to 6, **characterized in that** each steering system (1a, b) has a dedicated, substantially closed, steering housing (12), and the emergency power supply (9) and the respective drive unit (4) are arranged in at least one steering housing (12).

8. Electromechanical dual-circuit steering system according to any one of claims 1 to 7, **characterized in that** the dual-circuit steering system has an emergency power supply (9) for supplying all of the electric motors (7) with energy in the event of a failure of the main power supply (8).

9. Electromechanical dual-circuit steering system according to any one of claims 1 to 8 , **characterized in that** the force for actuating the steering linkage (5a, b) originates solely from the respective electric motor (7).

10. Electromechanical dual-circuit steering system according to any one of claims 1 to 10, **characterized in that** the dual-circuit steering system comprises a data interface (19) for actuating the electric motor (7) by an autonomous driving control system for driverless operation of the utility vehicle.

11. Electromechanical dual-circuit steering system according to any one of claims 1 to 10, **characterized in that** the dual-circuit steering system has a sensor which is arranged on a direction-selecting element of the utility vehicle and which detects a desired steering angle and transmits it to a motor control module (18) of the dual-circuit steering system, which motor control module, on the basis of the detected desired steering angle, activates the electric motor (7).

12. Electromechanical dual-circuit steering system according to any one of claims 1 to 11, **characterized in that** the respective electric motor (7) for actuating the steering linkage (5a, b) comprises a linear actuator (16).

13. Electromechanical dual-circuit steering system according to any one of claims 1 to 12, **characterized in that** the respective electric motor (7) has a rotor (13) which is designed as a hollow shaft and is connected to a spindle nut (14) of the drive unit (4) in a rotationally secured manner, which spindle nut (14) is designed to drive a threaded spindle (15), which is incorporated by the drive unit (4), for actuating the steering linkage (5a, b).

14. Utility vehicle, **characterized in that** it has an electromechanical dual-circuit steering system according to any one of claims 1 to 13.

## Revendications

1. Système de direction électromécanique double pour un véhicule utilitaire avec deux systèmes de direction (1a, b) comprenant respectivement une unité d'entraînement (4) pour l'actionnement d'une tringlerie de direction (5a, b) respective pour des roues (6a, b, c, d) du véhicule utilitaire, dans lequel chaque unité d'entraînement (4) présente un moteur électrique (7) respectif, dans lequel le système de direction double présente une alimentation en courant principale (8) pour l'alimentation des moteurs électriques (7) en énergie, **caractérisé en ce que** le système de direction double présente au moins une alimentation en courant d'urgence (9) pour l'alimentation d'un moteur électrique (7) de l'un système de direction (1a) en énergie en cas de panne de l'alimentation en courant principale (8), et l'autre système de direction (1b) est réglé de manière rigide.

2. Système de direction électromécanique double selon la revendication 1, **caractérisé en ce que** le système de direction double comprend par moteur électrique (7) une alimentation en courant d'urgence (9) sensiblement autonome.

3. Système de direction électromécanique double selon l'une quelconque des revendications 1 à 2, **caractérisé en ce que** l'alimentation en courant d'urgence (9) présente un générateur (17) qui est conçu afin d'être entraîné par un roulement du véhicule utilitaire et d'alimenter au moins l'un des moteurs électriques (7) en énergie.

4. Système de direction électromécanique double selon l'une quelconque des revendications 1 à 3, **caractérisé en ce que** l'alimentation en courant d'urgence (9) présente un dispositif de stockage d'énergie (11) pour l'alimentation du moteur électrique (7).

5. Système de direction électromécanique double selon la revendication 4, **caractérisé en ce que** l'alimentation en courant d'urgence (9) est conçue afin de charger le dispositif de stockage d'énergie (11) en cas de panne de l'alimentation en courant principale (8) par récupération de forces de rappel à partir de la tringlerie de direction (5a, b).

6. Système de direction électromécanique double selon l'une quelconque des revendications 4 à 5, **caractérisé en ce que** le dispositif de stockage d'énergie (11) présente un accumulateur.

7. Système de direction électromécanique double selon l'une quelconque des revendications 1 à 6, **caractérisé en ce que** chaque système de direction (1a, b) présente un propre boîtier de direction (12) sensiblement fermé, et l'alimentation en courant d'urgence (9) ainsi que l'unité d'entraînement (4) respective sont agencées dans au moins un boîtier de direction (12).

8. Système de direction électromécanique double selon l'une quelconque des revendications 1 à 7, **caractérisé en ce que** le système de direction double présente une alimentation en courant d'urgence (9) pour l'alimentation de tous les moteurs électriques (7) en énergie en cas de panne de l'alimentation en courant principale (8).

9. Système de direction électromécanique double selon l'une quelconque des revendications 1 à 8, **caractérisé en ce que** la force d'actionnement de la tringlerie de direction (5a, b) provient seulement du moteur électrique (7) respectif.

10. Système de direction électromécanique double selon l'une quelconque des revendications 1 à 10, **caractérisé en ce que** le système de direction double comprend une interface de données (19) pour la commande du moteur électrique (7) par un système de commande de conduite autonome pour le fonctionnement sans conducteur du véhicule utilitaire.

11. Système de direction électromécanique double selon l'une quelconque des revendications 1 à 10, **caractérisé en ce que** le système de direction double présente un capteur agencé au niveau d'un élément de commutation de direction du véhicule utilitaire, capteur qui détecte un angle de direction de consigne et le transmet à un module de commande de moteur (18) du système de direction double, module qui commande le moteur électrique (7) sur la base de l'angle de direction de consigne détecté.

12. Système de direction électromécanique double selon l'une quelconque des revendications 1 à 11, **caractérisé en ce que** le moteur électrique (7) respectif comprend un actionneur linéaire (16) pour l'actionnement de la tringlerie de direction (5a, b).

13. Système de direction électromécanique double selon l'une quelconque des revendications 1 à 12, **caractérisé en ce que** le moteur électrique (7) respectif présente un rotor (13) formé comme arbre creux, rotor qui est relié de manière immobile en rotation à un écrou de broche (14) de l'unité d'entraînement (4), lequel écrou de broche (14) est conçu afin d'entraîner une broche filetée (15) incorporée par l'unité d'entraînement (4) pour l'actionnement de la tringlerie de direction (5a, b).

14. Véhicule utilitaire, **caractérisé en ce qu'**il présente un système de direction électromécanique double selon l'une quelconque des revendications 1 à 13.
